Europäisches Patentamt

European Patent Office

Office européen des brevets

(19)

(11) EP 0 720 085 A2

(12) EUROPEAN PATENT APPLICATION

(43) Date of publication:
03.07.1996 Bulletin 1996/27

(51) Int Cl.⁶: G06F 3/06, G11B 20/00

(21) Application number: 95308787.1

(22) Date of filing: 05.12.1995

(84) Designated Contracting States:
DE FR GB

(30) Priority: 29.12.1994 US 365877

(71) Applicant: International Business Machines
Corporation
Armonk, N.Y. 10504 (US)

(72) Inventor: Flynn, John Thomas
Morgan Hill, California 95037 (US)

(74) Representative: Lloyd, Richard Graham
IBM (UK) Ltd,
UK Intellectual Property Department,
Hursley Park
Winchester, Hampshire SO21 2JN (GB)

(54) **Compression monitoring system for controlling physical space allocation in a logically-mapped data store**

(57)    A system for managing the allocation of physical space in a data storage subsystem for storing compressed data. The system monitors the commitment level of the physical space in each data storage subsystem and migrates data that compresses poorly to other data storage subsystems or to physical areas reserved for uncompressed data when available physical space falls below a threshold. The allocation procedure optimizes utilization of physical space for compressed data storage without risking host processor disruption by unplanned backing-space overruns caused by undetected data compression inefficiency.

*FIG. 6*

## Description

This invention relates generally to systems for digital data storage and retrieval and to processes for allocating physical data storage space therein.

Modern computer systems require ever-increasing capacity for storing data. Advances in magnetic disk storage technology include the architectural innovation known in the art as Redundant Arrays of Inexpensive Disks (RAID). Reference is made to Patterson et al. ("A Case for Redundant Arrays of Inexpensive Disks (RAID)", *Proc. ACM SIGMOD Conference,* Chicago, IL, June 1988, pp. 109-116) for a detailed description of RAID data store architecture and procedures. RAID architecture requires some transparent process for allocating logical data to a number of separate physical disk storage devices so that the host processor can operate as if the RAID is a single "logical" disk store.

Data compression is used in the computer arts for a variety of purposes, one of which is to increase the available capacity in a data store having fixed physical space. This data store capacity increase is achieved by discarding redundancy in any useful manner known in the art before storing the data. Useful data compression techniques such as the adaptive Ziv-Lempel variable-length alphabet procedure operate to remove redundancy adaptively in a manner that depends on the type of redundancy in the data. When compressing data with adaptive coding alphabets, it is virtually impossible to predict the actual compression ratio achievable for any particular block of data without first compressing the data and then comparing the compressed data volume to the uncompressed data volume.

The unpredictability of compressed data storage presents a problem for both physically and logically mapped data stores because a host processor relies on a predetermined map of available data storage space when storing new data. For physically mapped stores, this predetermined map merely duplicates the physical data storage space available in a rotating disk, for instance, which may represent the product of disk heads, tracks, sectors and sector byte counts. When a host processor stores a block of uncompressed data to a physically-mapped disk, the logical data address often is identical to the physical disk location allocated to the logical data. When the host processor retrieves uncompressed data from a physically-mapped disk, the logical data address is directly interpreted by the disk controller to locate the data on the physical disk surface. Thus, for uncompressed data storage, a 1-to-1 mapping of logical data address (used by the host processor) to a physical data location (used by the rotating disk controller) presents none of the data storage and retrieval problems seen with compressed data storage in virtual store architectures.

The introduction of RAID architecture requires more sophisticated data mapping procedures to allocate logical data across several physical storage devices. Moreover, the introduction of data storage compression generally eliminates the 1-to-1 allocation of logical data to physical storage space and the unpredictability of actual data compression ratios obliges the practitioner to either reserve more physical space than may be actually needed to store the logical data or risk unexpected and unplanned exhaustion of physical data storage space during normal operation. Allocating too much physical space works against the efficiency of data storage compression and accepting possible unexpected exhaustion of physical storage space works against host processor performance efficiency.

Practitioners have proposed a variety of solutions to the inherent conflict between data storage compression efficiency and host processor performance efficiency. For instance, in U.S. Patent 5,278,970, Pence discloses a method for the efficient organization of compressed data stored in a data store. Pence uses an estimated compression factor to predict the available physical storage space and teaches a three-step process of (a) compressing and storing a first portion of the data set, (b) computing the actual data compression factor resulting for the first portion and (c) allocating storage space for the remainder of the data set according to an estimated data compression factor revised to equal the actual data compression factor found for the first portion. Pence is primarily concerned with reducing media spanning in an off-line data cartridge library and his method is not particularly useful for rotating disk stores because of the host processor overhead required to repeatedly calculate actual storage compression factors midway into each data block transfer to disk. Also, total DASD data space is set in host during device initialization and is never dynamically updated.

In U. S. Patent 5,237,675, Hannon, Jr. discloses a similar technique for organizing compressed data in a rotating disk store according to an estimated data compression ratio. Hannon uses a local microprocessor to store and retrieve data in compressed form transparently to the host processor. An estimated compression factor is selected and stored in the microprocessor before the logical data block is compressed. After compression, the microprocessor creates a special table entry containing descripter field information for the logical block. The descripter field includes the physical locations allocated to the logical block and may include linking sector information for spanning the stored compressed data block between two or more physical locations if the initial estimated physical space is not sufficient. Hannon considers solutions to individual physical sector overflow and does not consider methods for avoiding the unexpected exhaustion of all physical space in a rotating disk that must occur if substantial numbers of data blocks fail to compress according to the assumed compression factor.

Other practitioners consider the general problem of compressed data storage. For instance, in U. S. Patent 4,602,333, Komori discloses a process for storing tomographic images in both uncompressed and compressed forms on magnetic disk stores to balance image access speed and storage space requirements. In U. S. Patent 5,208,676, Inui discloses an image recording system that allocates data storage space according to a detected data compression ratio. Inui considers only the particular requirements of digital image copying machines and neither considers nor suggests solutions to the general data processing data store space allocation problem.

In U. S. Patent 5,194,995, Severtson et al. disclose a method and apparatus for recording compressed data on a digital audio tape (DAT) medium. Severtson et al. temporarily store data into a standard digital data storage (DDS) group format before compression and, after compression, allocate each group into a variable number of frames for recording onto the DAT medium. If the compression ratio falls short of a predetermined standard of efficiency, then the compressed group is instead recorded as fixed number of frames onto the DAT media without compression. This elaborate procedure ensures accurate allocation of each group to the physical space required before actually storing to tape.

Similarly, in U. S. Patent 5,237,460 Miller et al. describe a process for storing compressed data in any random access storage device such as a rotating disk. Miller et al. first organize the random access data store to provide a multiplicity of partitions each associated with one of several block sizes. The data to be stored is then organized in data blocks of fixed size that are stored in compressed format only if the compressed block fits into the predetermined block size assigned to a small-block partition in the storage device. If the compressed data block size exceeds the small-block size, the data block is stored without compression into another of the partitions reserved for that purpose. Thus, Miller et al. teach first (a) compressing each data block, then (b) testing the compressed data block against a predetermined compression ratio. Only after compressing and testing the data block can the actual storage allocation decision be made, which may include recovering the uncompressed block for storage in an uncompressed region of the random access store. The size and number of blocks allocated to any partition is estimated according to an assumption of the average ratio of compressible blocks to uncompressible blocks for the particular compression technique used. Because of the extensive (brute-force) processing overhead imposed by Miller et al., their process does not appear to feasibly resolve the problem of unexpected depletion of all physical space in the store because of unexpected inefficiencies in data compression.

Thus, until now, there has been no efficient allocation method for mapping compressed logical data to available physical space in a logical data store such as a RAID store. The related unresolved problems and deficiencies are clearly felt in the art and are solved by this invention in the manner described below.

This invention provides a method for allocating logical data to physical data storage space in a computer system having at least one host processor coupled to a plurality of data storage systems each having a fixed quantity of physical space for storing logical data according to a predetermined data compression ratio, said method comprising the steps of: comparing the unoccupied portion of said physical space to a threshold in each said data storage subsystem; comparing an actual data compression ratio to said predetermined data compression ratio in said each data storage subsystem; and moving at least some of the logical data in one said data storage subsystem when said unoccupied physical space is less than said threshold and said actual data compression ratio is less than said predetermined data compression ratio in said one data storage subsystem.

This invention solves the above problems by introducing a space utilization monitor in the data store to monitor both (a) the unallocated physical space remaining within a partition and (b) the actual compression efficiency in the partition with respect to the predetermined compression ratio assigned to the partition. With this monitor information, the allocation system of this invention can detect space "exceptions" in any partition throughout a data store system and responsively migrate poorly compressed data from a partition at risk to another partition that has a different data compression efficiency requirement. A particular space exception can be handled either locally in the data store system or by the host processor, depending on the character of the physical space problem.

This enables impending physical data storage space exhaustion arising from unexpectedly poor data compression efficiency to be adaptively resolved without unnecessarily reducing host processor performance efficiency. It is an advantage of the method that out-of-space or significant under-utilization conditions are avoided in data store subsystems without prior knowledge of data compression efficiency and without considering efficiency in relatively empty partitions.

Moreover, physical space in data store systems having a multiplicity of different logical and physical partitions with independent compression requirements can be efficiently and transparently allocated. It is an advantage of the method that space allocation can be managed on a logical basis suited to RAID architectures wherein logical data is distributed across many independent physical machines.

For a more complete understanding of this invention, reference is now made to the following detailed description of the embodiments as illustrated in the accompanying drawing, wherein:

Fig. 1 is a functional block diagram of a multi-host data processing system having a plurality of data storage subsystems;

Figs. 2A-2B are functional diagrams illustrating the physical and logical characteristics of a typical RAID data store;

Fig. 3 illustrates the operation of a single data store in the Home Address allocation mode from the prior art;

Fig. 4 illustrates the operation of a RAID data store in the Home Address allocation mode from the prior art;

Fig. 5 illustrates the operation of a RAID data store in the Log Structured File allocation mode from the prior art;

Fig. 6 is a functional block diagram of an exemplary data processing system that includes a data store management system;

Fig. 7 is a functional block diagram of a flow chart exemplifying the method of this embodiment; and

Fig. 8 is a schematic diagram of an exemplary computer-readable program product.

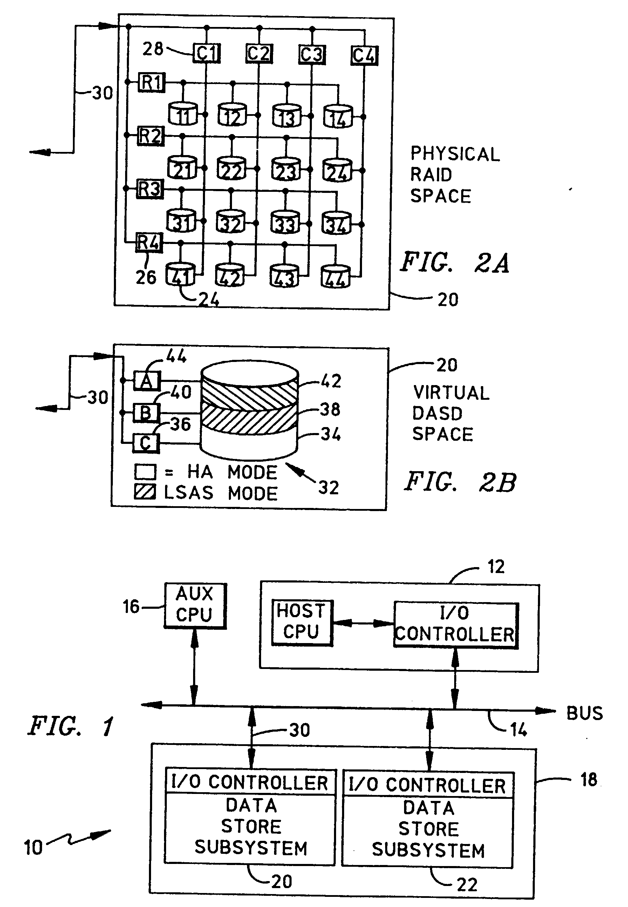

The system of this invention is now described in connection with several exemplary embodiments such as the computer system 10 shown in Fig. 1. Computer system 10 includes one or more host processors exemplified by the host processor 12 coupled by means of a data transfer bus 14 to a variety of other system elements such as an auxiliary processor 16 and a data store system 18.

Data store system 18 includes several independent data store subsystems exemplified by data store subsystems 20 and 22, which are independently coupled to data bus 14. For illustrative purposes, data store subsystems 20 and 22 are presumed to include some combination of Direct Access Storage Devices (DASDs) using rotating magnetic disk technology. It should be appreciated, however, that this invention can be applied to other data store technologies and is not limited to data stores based on DASD hardware.

For illustrative purposes, data store subsystem 20 is shown in more physical detail as a RAID system in Fig. 2A and in more logical detail in Fig. 2B. Fig. 2A shows a schematic representation of a RAID data store subsystem 20 consisting of an array of DASDs exemplified by the DASD 24 in the (4,1) array position. Each DASD row is coupled to a single row controller, exemplified by the row controller 26 in the R4 position. Similarly, each DASD column is coupled to a column controller exemplified by the column controller 28 shown in the C1 position. RAID subsystem 20 stores data in physical locations throughout the DASD array and couples to system bus 14 through the bus 30 to receive and transmit data. As is known in RAID art, logical data is typically distributed across the entire physical DASD array to achieve the advantageous reliability and performance available from RAID data store architecture.

Fig. 2B provides a logical illustration of data store subsystem 20 showing the logical data structure of a single "virtual" DASD 32 comprising the physical DASD array from Fig. 2A. Without data compression, the logical data capacity of data store subsystem 20 is equal to the aggregate physical data space in the "backing-DASDs" exemplified by DASD 24 in Fig. 2A. Thus, virtual DASD 32 has a logical data capacity D equal to sixteen times the physical data space $s_n$ available in the $n^{th}$ backing DASD 24, presuming that all DASDs in the RAID array have equal physical space available. This can be expressed more generally as

$$D_{20} = P_{20} = \sum_{n=1}^{16} s_n$$

wherein $s_n$ is the physical space available in the $n^{th}$ backing DASD and $P_{20}$ is the total physical space available in the sixteen-element DASD array shown in Fig. 2A.

The management of data store subsystem 20 for uncompressed data is relatively straight-forward. That is, because the total available physical space $P_{20}$ is predetermined, and because host processor 12 keeps track of the total quantity of logical data $d_{20}$ actually stored to data store subsystem 20, calculation of the remaining physical space available for data storage is simply a matter of subtracting the amount of stored logical data $d_{20}$ from the original physical space $P_{20}$ to obtain remaining physical space $(P_{20} - d_{20})$. This calculation is not so trivial when data compression is introduced into the data store system 18.

In Fig. 2B, virtual RAID DASD 32 can store data in either the traditional Home Address (HA) mode or in the Log Structured Array (LSA) or Log Structured File (LSF) mode known in the art for compressing logical data before storage to physical space in data store subsystem 20. With data compression in LSA mode, the logical data capacity $D_{20}$ is the apparent size of subsystem 20 perceived by host processor 12. Capacity $D_{20}$ is dependent on an expected or assumed data compression ratio $R_{20} = D_{20}/P_{20}$ by definition, where $P_{20}$ is the physical space in the RAID DASD array. Disadvantageously, the properties of the data may be such that the expected compression ratio $R_{20}$ does not predict the actual data compression ratio $r_{20} = d_{20}/p_{20}$, where $p_{20}$ is the quantity of physical space actually occupied by logical data quantity $d_{20}$ in data store subsystem 20. If $r_{20} < R_{20}$, then data store subsystem 20 may run out of physical space in the backing DASDs to which to write logical data. This condition produces an output error to host processor 12 leading to either abnormal termination of the process or perhaps even abnormal termination of the operating system itself. This abnormal termination occurs because the host operating system assumes that the logical data storage capacity $D_{20}$ represents actual physical space and accepts an "out-of-space" condition as a permanent output error.

In Fig. 2B, virtual DASD 32 is shown having several partitions or storage regions, each with different properties, for illustrative purposes. For example, partition 34 is shown coupled to a virtual controller 36, which operates in the Home Address mode so that logical data is mapped one-to-one with the physical space in virtual partition 34. Another virtual partition 38 is shown coupled to a second virtual controller 40, which operates in the LSA mode assuming a predetermined data compression ratio of $R_{38}$. Finally, a third partition 42 is shown coupled to a third virtual controller 44, which operates in the LSA mode assuming a predetermined data compression ratio of $R_{42} > R_{38}$. Thus, for illustrative purposes, data store subsystem 20 is shown in Fig. 2B as having three different logical partitions each operating with a different presumed value for predetermined data compression ratio R. As is well-known in the RAID art, each of the three virtual partitions 34, 38 and 42 is distributed across all sixteen physical DASDs typified by DASD 24 in Fig. 2A. Accordingly, it will be readily appreciated that prior allocation of logical data to physical space in data store subsystem 20 is not possible because the host preallocates total capacity at initialization without knowledge of actual data compression ratios.

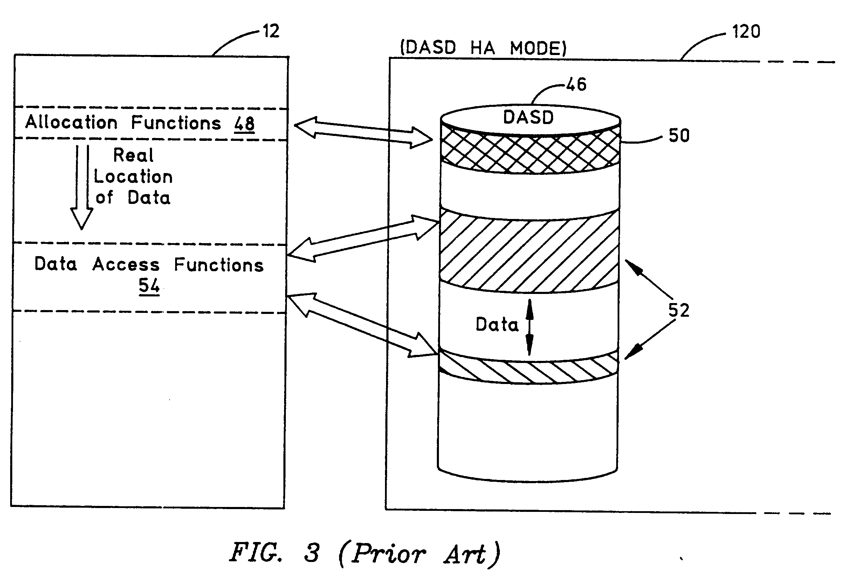

To appreciate the operation of the various partitions 34, 38 and 42 in Fig. 2B, reference is now made to Figs. 3-5. In Fig. 3, host processor 12 is shown coupled to a data store subsystem 120, which includes a single physical DASD 46 operating in the Home Address (HA) mode. When data sets are created in host processor 12, physical space in DASD 46 is allocated by the allocation functions 48 and recorded in the Volume Table Of Contents (VTOC) area 50 of DASD 46. Other useful methods include recording such information in catalogs or allocation maps. Once the VTOC entries are made, data are stored in the locations 52 allocated in DASD 46. In this situation, host processor 12 must pass the actual data locations 52 from allocation functions 48 to the data access functions 54 when reading or writing data to subsystem 120.

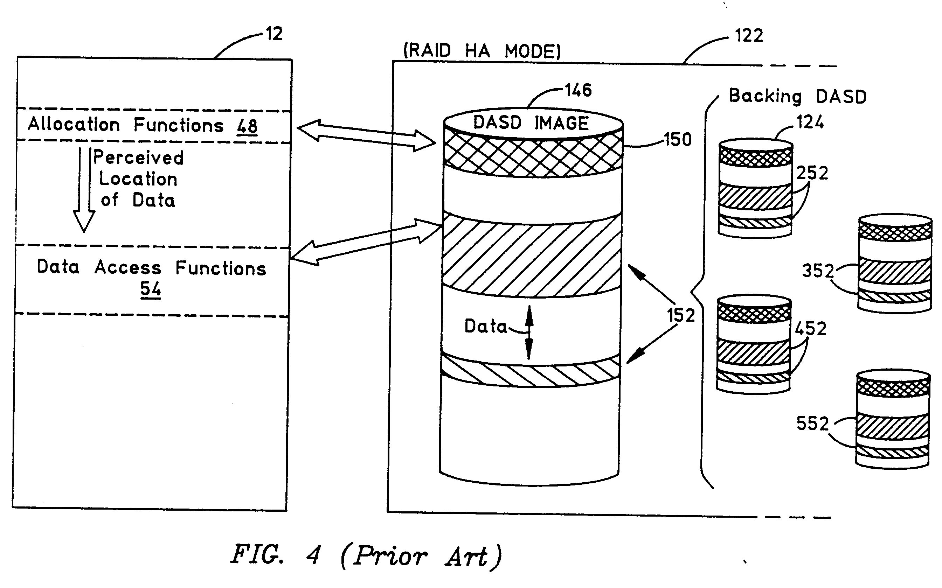

In Fig. 4, when RAID architecture is introduced, the HA mode situation changes. The "backing-DASDs" exemplified by the DASD 124 provide the physical space necessary to support a virtual DASD image 146. Virtual DASD 146 also includes the usual VTOC area 150 and the usual data areas 152 for the HA mode as shown. However, data areas 152 are physically distributed across data areas 252, 352, 452 and 552 in the backing DASDs. Thus, the logical data stored in areas 152 cannot be related by host processor 12 to actual physical locations in the backing-DASDs, as is known in the RAID art. The RAID configuration controllers instead present virtual DASD image 146 to host processor 12, which operates by passing the virtual data locations from allocation functions 48 to data access functions 54. So long as DASD subsystem 122 operates in HA mode, logical data stored in areas 152 is mapped one-to-one to the backing-DASD physical spaces 252, 353, 452 and 552 by the RAID subsystem. This is transparent to host processor 12 but host processor 12 can still rely on logical data capacity $D_{122} = P_{122}$ to ensure that no overflow condition can occur.

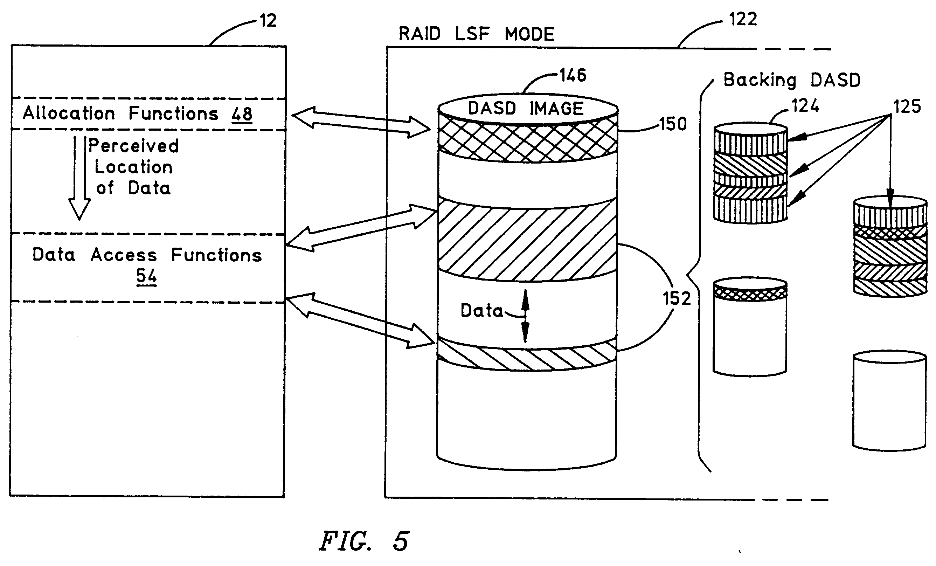

In Fig. 5, the same data store subsystem 122 is shown operating in LSF mode with data compression. In HA mode, all physical locations in the backing-DASDs are preallocated and always contain the same quantity of logical data. In LSF mode, the first data received by subsystem 122 is stored at the beginning of a large log file made up of the aggregate of the backing-DASDs exemplified by DASD 124. So far as host processor 12 is concerned, DASD image 146 continues to present an orderly HA mode version of the stored data and allocation functions 48 operate with data access functions 54 by passing the perceived data addresses as before in Figs. 3-4. With the LSF system, logical data can be compressed and/or compacted so that the physical storage of the data requires less space in backing DASDs. When previously written data is updated by new data received from host processor 12, the new data cannot be assumed to compress or compact to the same number of physical bytes as did the original data. Thus, subsystem 122 is obliged to store the updated logical data in a new physical location in a new log file and must later reclaim the previously occupied physical space, exemplified by the segments 125, as part of a general process of accumulating smaller physical storage areas into larger contiguous areas. This activity is transparent to host processor 12, which continues to function as if subsystem 122 is operating in HA mode with an expanded capacity equivalent to $D_{122} = R_{122} P_{122}$. If the presumed data compression ratio $R_{122}$ is too large to represent the actual data compression experience in subsystem 122, then the physical backing DASDs may exhaust all space without the knowledge of host processor 12 and, until now, host processor 12 has no mechanism for ensuring adequate backing-DASD space.

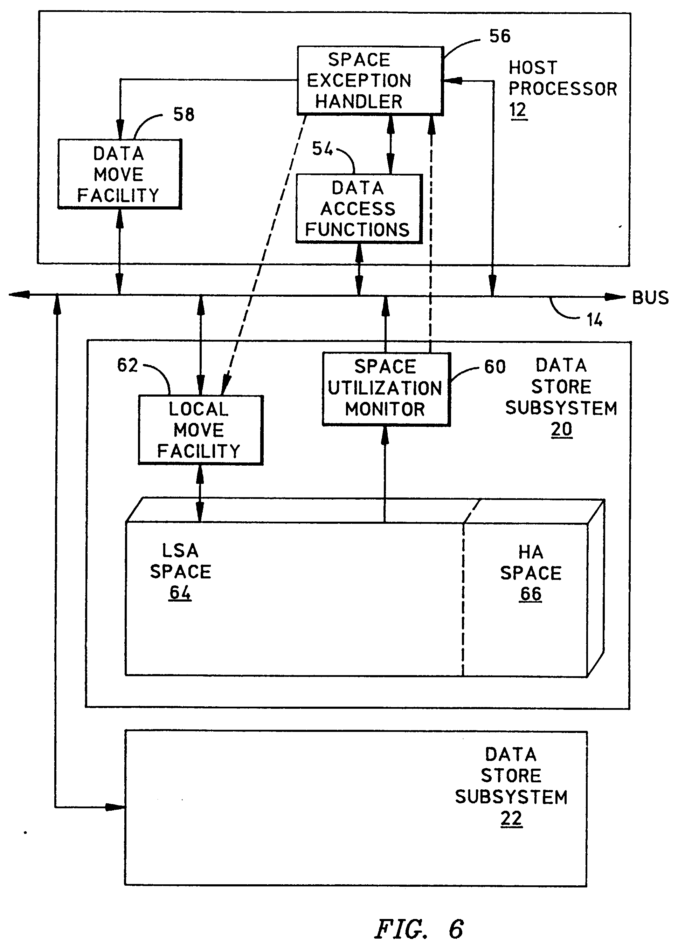

A system according to this invention prevents unexpected physical space exhaustion in the backing DASD of a RAID system by introducing a new synergistic communication function between host processor 12 and data store subsystem 20. In Fig. 6, host processor 12 is shown with two new program objects, a space exception handler 56 and a data move facility 58. Both handler 56 and facility 58 are illustratively coupled to bus 14 for communication with data store subsystem 20. Subsystem 20 is shown with two new program objects, a space utilization monitor 60 and a local move facility 62. For illustrative purposes, the physical space in data store subsystem 20 is shown as a block of compressed data space 64 managed in LSA mode and a block of uncompressed data space 66 managed in HA mode. The logical data storage capacity of uncompressed data space 66 is $D_{66} = P_{66}$, where $P_{66}$ is the associated backing-DASD space. Similarly, the logical data storage capacity of compressed data space 64 is $D_{64} = R_{64} P_{64}$, where $P_{64}$ is the backing-DASD space allocated to the LSA mode in subsystem 20 and $R_{64}$ is the value assumed for the predetermined data compression ratio.

In operation, space utilization monitor 60 communicates directly with space exception handler 56. Space exception handler 56 communicates directly with either data move facility 58 or local move facility 62 or both and may also communicate directly with data allocation functions 48 (Fig. 5) . All four of these elements operate transparently to data access functions 54, which read and write data to data store subsystem 20 in the manner discussed above in connection with Figs. 3-5.

Space utilization monitor 60 tracks the remaining physical space available $(1 - p_{20})$ in subsystem 20 and compares the ratio $(1-p_i/P_i)$ with a predetermined threshold $T_{20}$, which is selected to optimize the efficiency of system 10. Assuming that $T_{20} = 20$ percent, when $(1-p_{20}/P_{20}) \leq 0.20$, space utilization monitor 60 only then interrogates the compression ratios of the stored data to locate data that compressed at less than the expected compression ratio $R_{20}$. This is accomplished by computing or retrieving the actual data compression ratio $r_{20} = d_{20}/p_{20}$, where $d_{20}$ is a logical data quantity stored in a physical space portion $p_{20}$. This "actual" ratio may be separately computed or retrieved in subsystem 20 for any plurality of data groups of any size. If poorly compressed data is discovered in subsystem 20, then space utilization monitor 60 passes this information directly to space exception handler 56, but if $r_{20} \geq R_{20}$, then no prospective out-of-space condition exists even though the remaining physical space is below the 20 percent threshold $T_{20}$ and it is ignored.

Space exception handler 56 receives information sufficient to determine the severity of the condition (e.g., "warning", "severe", "acute", etc.) together with locations of logical data that compressed poorly. These indications can be communicated in any useful form and are herein denominated space exception flag states. Thus, as used herein, a space exception flag $F_{20}$ can be "reset" to a "reset state" to indicate no out-of-space prospects, or may be "set" to one of several "set states" to indicate "warning", "severe", "acute" and the like. Space exception handler 56 receives this space exception flag $F_{20}$ information from subsystem 20 together with specific logical data location information. When the probability of an out-of-space condition decreases because of removal of poorly compressed data or for any other reason, space utilization monitor 60 passes this updated "flag" information as well to space exception handler 56.

When space exception flag $F_{20}$ is received by space exception handler 56, handler 56 evaluates the scope of the problem and initiates corrective action to eliminate any possibility of an out-of-space error. The particular corrective action depends on the type of data involved and the "state" of the space exception flag $F_{20}$. Examples of a corrective action response to various hypothetical situations are presented below in Table 1.

Table 1

| Data type | Data retention time | Data in store | Immediate action | Other action |
|---|---|---|---|---|
| Page | Short | Individual records or associations of records | Suspend page out operations to the affected partition if the severity is serious or acute. | Migrate affected pages to another store if the severity is acute. |
| SPOOL | Medium | Individual records or associations of records | Suspend new SPOOL block allocations on the affected partition. | Migrate SPOOL records to another store if severity is severe or acute. |
| Program | Long | Individual records | None. | Move program to a different library on another store. |
| Data sets | Long | Whole data set | Suspend writes if severity is acute. | Move data set to another store. |

In appreciating Table 1, consider that any reduction of severity during a pending data move operation should abort and/or reverse any previous actions taken.

Generally, data move facility 58 should reside in host processor 12 to ensure that processor 12 knows where to find the moved data. This is necessary when the data cannot be moved transparently to host processor 12. However, in some situations, local move facility 62 can be used to correct the potential out-of-space problem transparently to host processor 12 without direct communication from space exception handler 56. For instance, in Fig. 6, local move facility 62 can correct a potential out-of-space problem in compressed data space 64 by moving poorly compressed data to uncompressed data space 66 within the same subsystem 20. Because the data remains within subsystem 20, local move facility 62 may operate without information and instructions received from space exception handler 56 and without communication with another data store subsystem. In the particular example shown in Fig. 6, if no space remains in HA mode space 66 of data store subsystem 20, poorly compressed data must be moved out of data store subsystem 20 and into another independent data store subsystem 22 having a lesser value for the predetermined assumed data compression ratio $R_{22} < R_{20}$.

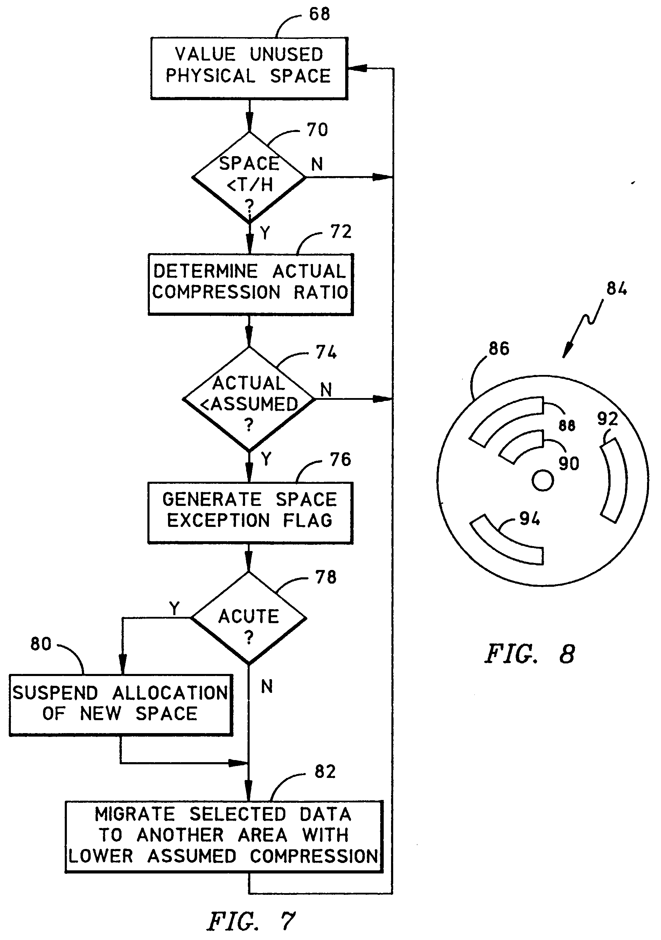

Fig. 7 illustrates the method beginning with evaluation of unused physical space at step 68. After obtaining the unused physical space available in the data store subsystem, the procedure tests the free space against the threshold T at step 70. Only when the free space is less than the predetermined threshold is step 72 executed to evaluate the actual compression ratios in the data store subsystem. After obtaining the actual compression ratio $r_i$, step 74 tests it against the assumed data compression $R_i$. If $r_i \geq R_i$ then step 74 merely returns to step 68 but if $r_i < R_i$ then the procedure generates a space exception flag $F_i$ at step 76 and passes the "flag" together with specific data block information to space exception handler 56 (Fig. 6). Upon receipt, flag $F_i$ is tested at step 78 to determine if it is severe enough to require special action. If it is, step 80 takes special action, which generally means suspending all allocation of new space in the affected subsystem until the potential out-of-space problem becomes less severe. Finally, step 82 migrates selected data to another area associated with a lower assumed data compression ratio $R_j < R_i$, wherein the moved data can presumably remain indefinitely without creating new out-of-space prospects resulting in additional moving.

Fig. 8 shows a schematic representation of a program product 84, which includes a storage medium 86. Medium 86 includes computer-readable program objects 88, 90, 92 and 94, which include program objects adapted to perform the necessary functions discussed above for space exception handler 56, data move facility 58, local move facility 62 and space utilization monitor 60. Program product 84 is not limited to these elements and may include any additional program objects necessary to implement the method of this invention.

Clearly, other embodiments and modifications of this invention may occur readily to those of ordinary skill in the art in view of these teachings. Therefore, this invention is to be limited only by the following claims, which include all such embodiments and modifications when viewed in conjunction with the above specification and accompanying drawing.

## Claims

1. A method for allocating logical data to physical data storage space in a computer system having at least one host processor coupled to a plurality of data storage systems each having a fixed quantity of physical space for storing logical data according to a predetermined data compression ratio, said method comprising the steps of:

   comparing the unoccupied portion of said physical space to a threshold in each said data storage subsystem;

   comparing an actual data compression ratio to said predetermined data compression ratio in said each data storage subsystem; and

   moving at least some of the logical data in one said data storage subsystem when said unoccupied physical space is less than said threshold and said actual data compression ratio is less than said predetermined data compression ratio in said one data storage subsystem.

2. In a computer system having at least one host processor coupled to a plurality I of data storage subsystems $\{S_i\}$ each having a fixed quantity $P_i$ of physical space for storing a first quantity $D_i$ of logical data that is quantified according to a predetermined data compression ratio $R_i = D_i/P_i$ and each having a variable quantity $p_i$ of said physical space occupied by a second quantity $d_i$ of said logical data and each being associated with a space exception flag $F_i$ having two or more states, wherein $0 < i \leq I$ are integers, a method for allocating logical data to said data storage subsystems $\{S_i\}$ comprising the steps of:

   (a) comparing the unoccupied portion $(1-p_i/P_i)$ of said physical space to a threshold $T_i$ in said each data storage subsystem $S_i$;

   (b) comparing an actual data compression ratio $r_i = d_i/p_i$ to said predetermined data compression ratio $R_i$ in said each data storage subsystem $S_i$;

   (c) setting said space exception flag $F_i$ to one of one or more set states in said each data storage subsystem $S_i$ responsive to said unoccupied physical space being less than said threshold such that $(1-p_i/P_i) < T_i$ when said actual data compression ratio is less than said predetermined data compression ratio such that $r_i < R_i$; and

(d) moving at least some of said logical data $d_i$ from one said data storage subsystem $S_i$ to another said data storage subsystem $S_j$ having a predetermined data compression ratio $R_j < R_i$ responsive to said space exception flag $F_i$ being in a set state for said one data storage subsystem $S_i$.

3. The method of claim 2 further comprising the step of:

(e) resetting said space exception flag $F_i$ to a reset state responsive to an increase either in said unoccupied physical space or in said actual data compression ratio such that $(1-p_i/P_i) \geq T_i$ or $r_i \geq R_i$ in said each data storage subsystem $S_i$.

4. The method of claim 3 wherein said moving step (d) comprises the step of:

(d.1) abandoning the movement of said at least some logical data from said one data storage subsystem $S_i$ responsive to a transition of said space exception flag $F_i$ to said reset state.

5. The method of claim 4 wherein said moving step (d) comprises the step of:

(d.2) returning to said one data storage subsystem $S_i$ said at least some logical data responsive to said space exception flag $F_i$ being in said reset state.

6. The method of claim 2 wherein at least one said storage subsystem $S_i$ includes another quantity of physical space for storing a third quantity of logical data without data compression and said moving step (d) comprises the step of:

(d.1) moving said at least some logical data to said another physical space responsive to said space exception flag $F_i$ being in a set state for said at least one data storage subsystem $S_i$.

7. The method of claim 6 further comprising the step of:

(e) resetting said space exception flag $F_i$ to a reset state responsive to an increase either in said unoccupied physical space or in said actual data compression ratio such that $(1-p_i/P_i) \geq T_i$ or $r_i \geq R_i$ in said at least one storage system $S_i$.

8. The method of claim 7 wherein said moving step (d) comprises the step of:

(d.2) abandoning the movement of said at least some logical data to said another physical space in said at least one data storage subsystem $S_i$ responsive to a transition of said space exception flag $F_i$ to a reset state.

9. The method of claim 2 wherein said one or more set states of said space exception flag $F_i$ include an urgent state, said method further comprising the steps of:

(e) setting said space exception flag $F_i$ to said urgent state in each said data storage subsystem $S_i$ in which occurs predetermined changes in said unoccupied physical space or said actual data compression ratio; and

(f) suspending allocation of logical data to each said data storage subsystem $S_i$ for which said associated space exception flag $F_i$ is in said urgent state.

10. The method of claim 9 further comprising the step of:

(g) resetting said space exception flag $F_i$ to a reset state responsive to an increase either in said unoccupied physical space or in said actual data compression ratio such that $(1-p_i/P_i) \geq T_i$ or $r_i \geq R_i$ in said each data storage subsystem $S_i$.

11. The method of claim 10 wherein at least one said storage subsystem $S_i$ includes another quantity of physical space for storing a third quantity of logical data without data compression and said moving step (d) comprises the step of:

(d.1) moving said at least some logical data to said another physical space responsive to said space exception flag $F_i$ being in a set state for said at least one data storage subsystem $S_i$.

**12.** A computer system comprising:

at least one host processor;

a data storage system coupled to said at least one host processor;

a plurality $I$ of data storage subsystems $\{S_i\}$ in said data storage system each having a fixed quantity $P_i$ of physical space for storing a first quantity $D_i$ of logical data that is quantified according to a predetermined data compression ratio $R_i=L_i/P_i$ and in each of which a variable quantity $p_i \leq P_i$ of said physical space is occupied by a second quantity $d_i$ of said logical data, wherein $0 < i \leq I$ are integers;

physical space monitor means coupled to said plurality of data storage subsystems $\{S_i\}$ for comparing the unoccupied portion $(1-p_i/P_i)$ of said physical space to a threshold $T_i$ and for comparing an actual data compression ratio $r_i=d_i/P_i$ to said predetermined data compression ratio $R_i$ in said each data storage subsystem $S_i$;

space exception means coupled to said physical space monitor means and to said host processor for setting a space exception flag $F_i$ to one of one or more set states responsive to said unoccupied physical space and said actual data compression ratio being such that $(1-p_i/P_i) < T_i$ and $r_i < R_i$; and

data move facility means coupled to said plurality of data storage subsystems $\{S_i\}$ and to said space exception means for moving at least some of said logical data $d_i$ from one said data storage subsystem $S_i$ to another said data storage subsystem $S_j$ having a predetermined data compression ratio $R_j < R_i$ responsive to said space exception flag $F_i$ being in a set state in said one data storage subsystem $S_i$.

**13.** The system of claim 12 further comprising:

reset means in said space exception means for resetting said space exception flag $F_i$ to a reset state responsive to an increase either in said unoccupied physical space or in said actual data compression ratio such that $(1-p_i/P_i) \geq T_i$ or $r_i \geq R_i$.

**14.** The system of claim 13 further comprising:

undo means in said data move facility means for abandoning the movement of said at least some logical data from said one data storage subsystem $S_i$ responsive to said space exception flag $F_i$ being in said reset state.

**15.** The system of claim 14 further comprising:

at least one said data storage subsystem $S_i$ having another quantity of physical space for storing a third quantity of logical data without data compression; and

local data move facility means in said data storage system coupled to said space exception means for moving said at least some logical data to said another physical space in said at least one data storage subsystem $S_i$ responsive to said space exception flag $F_i$ being in a set state.

**16.** The system of claim 13 further comprising:

reset means in said space exception means for resetting said space exception flag $F_i$ to a reset state responsive to either an increase in said unoccupied physical space or in said actual data compression ratio such that $(1-p_i/P_i) \geq T_i$ or $r_i \geq R_i$.

**17.** The system of claim 16 further comprising:

undo means in said data move facility means for abandoning the movement of said at least some logical data from said one data storage subsystem $S_i$ responsive to said space exception flag $F_i$ being in said reset state.

**18.** The system of claim 12 wherein said one or more set states of said space exception flag $F_i$ includes an urgent state, said system further comprising:

urgent action means coupled to said plurality of data storage subsystems $\{S_i\}$ and to said space exception means for suspending allocation of logical data to each said data storage subsystem $S_i$ in which said space exception flag $F_i$ is in said urgent state.

**19.** The system of claim 18 further comprising:

reset means in said space exception means for resetting said space exception flag $F_i$ to a reset state responsive to either an increase in said unoccupied physical space or in said actual data compression ratio such that $(1-p_i/P_i) \geq T_i$ or $r_i \geq R_i$.

**20.** The system of claim 19 further comprising:

at least one said data storage subsystem $S_i$ having another quantity of physical space for storing a third quantity of logical data without data compression; and

local data move facility means in said data storage system coupled to said space exception means for moving said at least some logical data to said another physical space in said at least one data storage subsystem $S_i$ responsive to said space exception flag $F_i$ being in a set state.

PHYSICAL
RAID
SPACE

*FIG. 2A*

□ = HA MODE
▨ LSAS MODE

VIRTUAL
DASD
SPACE

*FIG. 2B*

*FIG. 1*

*FIG. 3 (Prior Art)*

EP 0 720 085 A2

*FIG. 4 (Prior Art)*

RAID LSF MODE

12

Allocation Functions 48

Perceived
Location
of Data

Data Access Functions
54

146

DASD IMAGE

150

122

Backing DASD

124

125

Data

152

*FIG. 5*

EP 0 720 085 A2

*FIG. 6*

68

┌─────────────────┐
│  VALUE UNUSED   │
│ PHYSICAL SPACE  │
└─────────────────┘

70

SPACE
<T/H
?

N

Y

72

┌─────────────────┐
│ DETERMINE ACTUAL│
│COMPRESSION RATIO│
└─────────────────┘

74

ACTUAL
<ASSUMED
?

N

Y

76

┌─────────────────┐
│ GENERATE SPACE  │
│ EXCEPTION FLAG  │
└─────────────────┘

78

ACUTE
?

Y

N

80

┌─────────────────┐
│SUSPEND ALLOCATION│
│  OF NEW SPACE   │
└─────────────────┘

82

┌──────────────────────┐
│ MIGRATE SELECTED DATA│
│  TO ANOTHER AREA WITH│
│LOWER ASSUMED COMPRESSION│
└──────────────────────┘

*FIG. 7*

*FIG. 8*